# FASCICULE DE BREVET EUROPEEN

(11) **EP 2 647 861 B1**
(45) Date de publication et mention de la délivrance du brevet: **30.03.2016**
(21) Numéro de dépôt: 13161927.2
(22) Date de dépôt: 02.04.2013
(51) Int. Cl.: F16D 55/36, F16D 65/00, F16D 65/12

(54) **Procédé d'utilisation et de rénovation d'un disque d'une pile de disques d'un frein de véhicule**
Verfahren zur Verwendung und Erneuerung einer Scheibe eines Bremsscheibenstapels einer Fahrzeugbremse
A method of using and renovationg a disk from a stack of disks of vehicle brake

(30) Priorité: 06.04.2012 FR 1253211
(43) Date de publication de la demande: 09.10.2013
(73) Titulaire: Messier-Bugatti-Dowty, 78140 Vélizy-Villacoublay (FR)
(72) Inventeur: Dereure, Olivier, 78140 VELIZY-VILLACOUBLAY (FR)
(74) Mandataire: Parzy, Benjamin Alain

(56) Documents cités:
- US-A- 3 712 427
- US-A- 5 099 960
- US-A- 5 769 185
- US-A1- 2010 090 059

## Description

L'invention concerne un procédé d'utilisation et de rénovation d'un disque d'une pile de disques d'un frein d'un véhicule.

### ARRIERE PLAN TECHNOLOGIQUE DE L'INVENTION

Les systèmes de freinage de la plupart des aéronefs modernes comportent des freins à disques empilés autour d'un tube de torsion, et des actionneurs de freinage portés par une couronne et commandés pour appliquer un effort de freinage sur les disques en vue d'exercer sur les roues freinées de l'aéronef un couple de freinage tendant à ralentir celui-ci. Parmi les disques, on distingue les disques stators solidaires en rotation du tube de torsion, et les disques rotors, solidaires en rotation de la jante de la roue.

Les disques s'usent lors des freinages ce qui oblige à exécuter régulièrement des opérations de maintenance sur la pile de disques pour remplacer une partie ou tous les disques de la pile afin que le frein puisse toujours répondre aux contraintes de freinage qui lui sont imposées. Une fois la course d'usure de la pile de frein consommée, la pile de disques est retirée du frein et envoyée au service expertise - rénovation.

Afin de limiter la fréquence de remplacements des disques par des disques neufs, il est ainsi connu du document US 7 900 751, un procédé de rénovation et d'utilisation d'un disque d'une pile de disques d'un frein comportant l'étape d'utiliser le disque pendant deux ou trois vies et de compenser une diminution d'épaisseur du disque après chaque vie en assemblant le disque avec une portion complémentaire.

Le document US 3 712 427 A montre un autre procédé d'utilisation et de rénovation d'un disque d'une pile de disques d'un frein.

### OBJET DE L'INVENTION

Un but de l'invention est de proposer un procédé d'utilisation et de rénovation d'un disque d'une pile de disques qui permette une réutilisation plus poussée des disques usés.

### BREVE DESCRIPTION DE L'INVENTION

En vue de la réalisation de ce but, on propose un procédé d'utilisation et de rénovation d'un disque d'une pile de disques d'un frein de véhicule comportant les étapes d'utiliser le disque lors de plusieurs vies et de compenser une diminution d'épaisseur après chaque vie en assemblant le disque avec une portion complémentaire, selon les disposition suivantes :
- après une première vie à l'issue de laquelle le disque à une épaisseur comprise entre 60 et 90% d'une épaisseur initiale du disque, surfacer les deux faces du disque et l'assembler avec une première portion complémentaire de sorte que l'assemblage ait une épaisseur sensiblement égale à l'épaisseur initiale du disque;
- après une deuxième vie à l'issue de laquelle le disque a une épaisseur supérieure à 50% de l'épaisseur initiale, surfacer le disque à une épaisseur de sensiblement 50% de l'épaisseur initiale et l'assembler avec une deuxième portion complémentaire de sorte que l'assemblage ait une épaisseur sensiblement égale à l'épaisseur initiale du disque;
- après une troisième vie à l'issue de laquelle le disque a une épaisseur comprise entre 40% et 10% de l'épaisseur initiale, surfacer le disque et l'assembler avec une troisième portion complémentaire de sorte que l'assemblage ait une épaisseur sensiblement égale à l'épaisseur initiale du disque;
- après une quatrième vie, rebuter le disque.

De la sorte, le disque est utilisé durant quatre vie avant qu'il ne soit nécessaire de le remplacer par un disque neuf. La durée de vie du disque est ainsi optimisée.

De façon avantageuse, en assemblant le disque par une portion complémentaire, il n'est pas nécessaire de modifier le reste de la pile de disques ainsi que les moyens de liaison de la pile de disques à la roue et au tube de torsion puisque l'assemblage du disque et de la portion complémentaire associée conserve la même épaisseur que l'épaisseur initiale du disque.

Pour toute la demande, on entend par « vie », un cycle d'utilisation du disque dans une pile de disques lorsque la pile de disques est montée sur le véhicule et subit des freinages successifs, la vie commençant lorsque la pile de disques est montée sur le véhicule et s'arrêtant lorsque la pile de disques est démontée du véhicule et envoyée en atelier pour inspection et maintenance.

De même, par « disque », on entend l'élément de friction généralement annulaire, qui présente l'épaisseur initiale en début de première vie et qui subit une usure au niveau de ses faces frottantes lors de chacune des vies suivantes, usure provoquant une diminution de son épaisseur.

De même par « assembler », on entend ajouter une portion complémentaire au disque en début de deuxième vie, de troisième et de quatrième vie de sorte que chaque assemblage de la portion complémentaire et du disque ait une épaisseur sensiblement égale à celle de l'épaisseur initiale. Par « disque complété », on entend ainsi l'assemblage du disque et une portion complémentaire correspondante.

Par « épaisseur sensiblement égale », on entend que l'épaisseur a une valeur proche de celle spécifiée, typiquement dans une plage de 5% de l'épaisseur spécifiée.

### BREVE DESCRIPTION DES DESSINS

L'invention sera mieux comprise à la lumière de la description qui suit en référence aux figures des dessins annexés parmi lesquelles :
- la figure 1 est une vue en coupe d'un frein électromécanique ;
- les figures 2a et 2b sont des schémas représentant un disque de la pile de disques du frein illustré à la figure 1 respectivement au début et à la fin de la première vie ;
- les figures 3a et 3b sont des schémas représentant le disque illustré à la figure 1 assemblé à une portion complémentaire, respectivement au début et à la fin de la deuxième vie ;
- les figures 4a et 4b sont des schémas représentant le disque illustré à la figure 1 assemblé à une portion complémentaire, respectivement au début et à la fin de la troisième vie ;
- les figures 5a et 5b sont des schémas représentant le disque illustré à la figure 1 assemblé à une portion complémentaire, respectivement au début et à la fin de la quatrième vie.

### DESCRIPTION DETAILLEE DE L'INVENTION

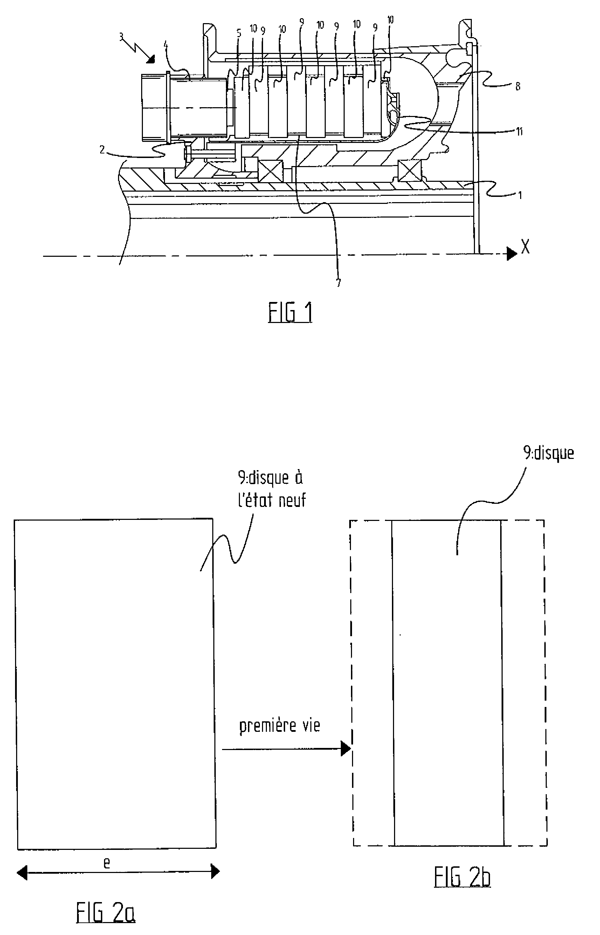

La figure 1 représente un frein qui est destiné à freiner une roue d'aéronef montée sur un essieu 1 d'axe X.

Le frein comporte une couronne 2 montée sur l'essieu 1 et arrêtée en rotation par rapport à celui-ci par des moyens non représentés. La couronne 2 porte des actionneurs 3 (dont un seul est représenté à la figure 1) qui comportent chacun un boîtier 4 dans lequel un poussoir 5 est monté pour coulisser selon une direction axiale parallèle à l'axe X et exercer sélectivement un effort de freinage sur une pile de disques 7 comportant alternativement des disques rotors 9 solidaires en rotation d'une jante 8 de la roue et des disques stators 10 immobilisés en rotation par un tube de torsion 11 solidaire de la couronne 2.

Le poussoir 5 peut par exemple être actionné par un moteur électrique de l'actionneur associé, le moteur étant agencé pour faire tourner l'un des éléments d'un système vis-écrou, par exemple du type à billes ou à rouleaux, le poussoir étant solidaire de l'autre des éléments du système. Un organe d'anti-rotation empêche alors le poussoir 5 de tourner.

L'application d'un effort de freinage force les disques de la pile de disques 7 à frotter les uns contre les autres de sorte qu'une partie de l'énergie cinétique de l'aéronef est dissipée en chaleur. Cependant, le frottement des disques entraîne inévitablement l'usure des différentes faces frottantes des disques rotors 9 et disques stators 10.

La figure 2a représente ainsi l'un des disques rotor 9 de la pile de disques 7. En début de première vie, ledit disque 9 présente une épaisseur initiale e. Le disque 9 est alors un disque monobloc. Le disque 9 est alors utilisé tel quel au cours de la première vie dans la pile de disques 7.

Au cours de ladite première vie, le disque 9 s'use, de façon sensiblement uniforme sur ses deux faces, ce qui va entraîner une diminution de l'épaisseur initiale e.

Ainsi, en référence à la figure 2b, à la fin de la première vie, c'est-à-dire lorsque la pile de disques 7 est démontée de l'aéronef, le disque 9 a une épaisseur comprise entre 60 et 90% de l'épaisseur initiale e. La diminution de l'épaisseur du disque 9 au cours de la première vie est illustrée en pointillés.

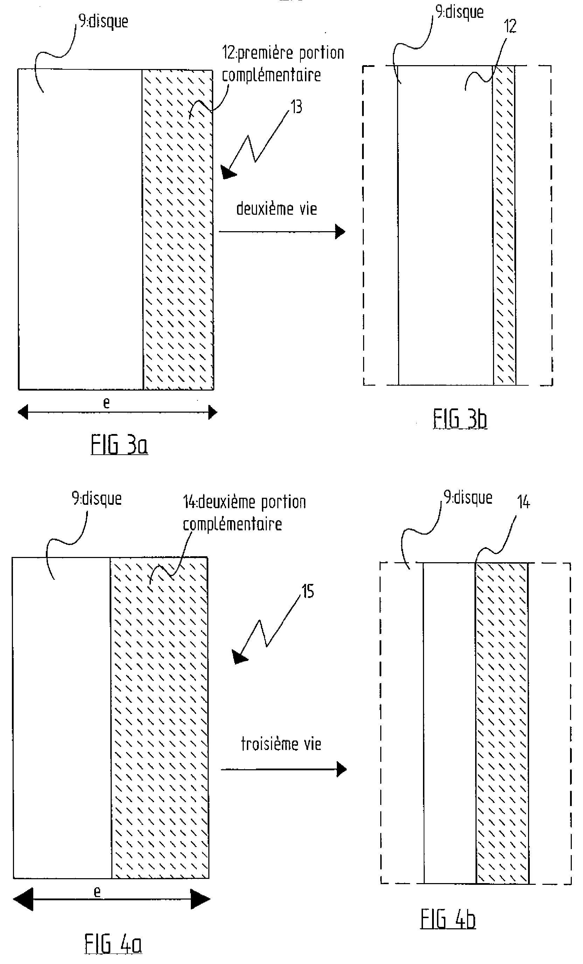

En référence à la figure 3a, on surface alors les deux faces du disque 9 pour améliorer l'état de surface desdites faces.

Pour compenser la diminution d'épaisseur du disque 9, principalement du fait de l'usure subi au cours de la première vie et accessoirement du surfaçage, le disque 9 est assemblé avec une première portion complémentaire 12.

Les procédés d'assemblage d'un disque avec une portion complémentaire sont bien connus de l'art antérieur et ne seront pas décrits plus en détails ici. Le disque et la portion complémentaire sont par exemple assemblés par collage ou bien encore par clippage par l'intermédiaire de cavaliers rivetés sur le disque et la portion complémentaire.

L'assemblage 13 formé du disque 9 avec la première portion complémentaire 12 a alors une épaisseur sensiblement égale à l'épaisseur initiale e.

Le disque complété 13 est alors utilisé en tant que disque rotor dans une nouvelle pile de disques 107 (non illustrée ici). Le disque 9 est ainsi utilisé dans la pile de disques 107 au cours d'une deuxième vie.

Au cours de ladite deuxième vie, le disque complété 13 s'use de façon sensiblement uniforme sur ses deux faces, c'est-à-dire de façon uniforme sur l'une des faces du disque 9 et sur l'une des faces de la première portion complémentaire 12, ce qui va entraîner une diminution de l'épaisseur du disque complété 13 et donc du disque 9.

Ainsi, en référence à la figure 3b, à la fin de la deuxième vie, le disque 9 a une épaisseur supérieure à 50% de l'épaisseur initiale e. De préférence, à la fin de la deuxième vie, le disque 9 a une épaisseur sensiblement égale à 50% de l'épaisseur initiale e mais toujours supérieure à 50% de l'épaisseur initiale e.

La diminution de l'épaisseur du disque 9 au cours de la deuxième vie est illustrée en pointillés.

En référence à la figure 4a, on surface au moins la face du disque 9 qui a été en contact avec l'un des disques stator 10 de la pile de disques 107 au cours de la deuxième vie. De préférence, on surface les deux faces du disque 9.

Dans tout les cas, on surface le disque 9 jusqu'à ce que le disque 9 ait une épaisseur sensiblement égale à 50% de l'épaisseur initiale, mais toujours supérieure à 50% de l'épaisseur initiale e.

Pour compenser la diminution d'épaisseur du disque 9 entre le début et la fin de la deuxième vie, le disque 9 est assemblé avec une deuxième portion complémentaire 14 qui a une épaisseur sensiblement égale à celle du disque 9 une fois l'étape de surfaçage effectuée. Le disque 9 est évidemment complété uniquement avec la deuxième portion complémentaire 14. Ce n'est pas le disque 9 et la première portion complémentaire 12 qui sont complétés par la deuxième portion complémentaire 14.

L'assemblage 15 formé du disque 9 avec la deuxième portion complémentaire 14 a ainsi une épaisseur sensiblement égale à l'épaisseur initiale e.

Le disque complété 15 est alors utilisé en tant que disque rotor dans une nouvelle pile de disques 207 (non illustrée ici). Le disque 9 est ainsi utilisé dans la pile de disques 207 au cours d'une troisième vie.

Au cours de ladite troisième vie, le disque complété 15 s'use de façon sensiblement uniforme sur ses deux faces, c'est-à-dire de façon uniforme sur l'une des faces du disque 9 et sur l'une des faces de la deuxième portion complémentaire 14, ce qui va entraîner une diminution de l'épaisseur du disque complété 15 et donc du disque 9.

Ainsi, en référence à la figure 4b, à la fin de la troisième vie, le disque 9 a une épaisseur comprise entre 40 et 10% de l'épaisseur initiale e. La diminution de l'épaisseur du disque 9 au cours de la troisième vie est illustrée en pointillés.

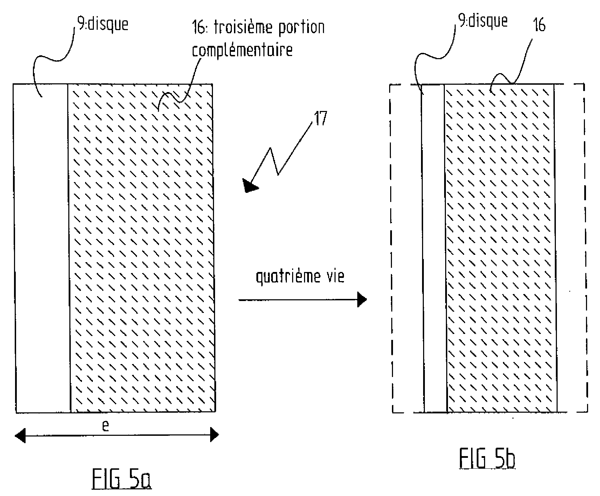

En référence à la figure 5a, on surface au moins la face du disque 9 qui a été en contact avec l'un des disques stator 10 de la pile de disques 207 au cours de la troisième vie. De préférence, on surface les deux faces du disque 9.

Pour compenser la diminution d'épaisseur du disque 9 entre le début et la fin de la troisième vie, le disque 9 est assemblé avec une troisième portion complémentaire 16. L'assemblage 17 formé du disque 9 avec la troisième portion complémentaire 16 a ainsi une épaisseur sensiblement égale à l'épaisseur initiale e. Le disque 9 est évidemment complété uniquement avec la troisième portion complémentaire 16.

Le disque complété 17 est alors utilisé en tant que disque rotor dans une nouvelle pile de disques 307 (non illustrée ici). Le disque 9 est ainsi utilisé dans la pile de disques 307 au cours d'une quatrième vie.

Au cours de ladite quatrième vie, le disque complété 17 s'use de façon sensiblement uniforme sur ses deux faces, c'est-à-dire de façon uniforme sur l'une des faces du disque 9 et sur l'une des faces de la troisième portion complémentaire 16, ce qui va entraîner une diminution de l'épaisseur du disque complété 17 et donc du disque 9.

En référence à la figure 5b, en fin de quatrième vie, le disque 9 est finalement rebuté, l'épaisseur du disque 9 en fin de quatrième vie empêchant son utilisation au cours d'une cinquième vie.

La diminution de l'épaisseur du disque 9 au cours de la quatrième vie est illustrée en pointillés.

Selon un mode de mise en oeuvre privilégié, la deuxième portion complémentaire 14 est un autre disque en début de troisième vie selon le procédé de l'invention.

Selon un mode de mise en oeuvre privilégié, le disque 9 en début de deuxième vie et en début de quatrième vie présente des épaisseurs complémentaires c'est-à-dire que l'épaisseur du disque 9 en début de deuxième vie additionnée à l'épaisseur du disque 9 en début de quatrième vie est sensiblement égale à l'épaisseur initiale e.

De préférence, la première portion complémentaire 12 est alors un autre disque en début de quatrième vie selon le procédé de l'invention.

De la même façon, de préférence, la troisième portion complémentaire 16 est alors un autre disque en début de deuxième vie selon le procédé de l'invention.

De façon encore plus privilégiée, les étapes d'utilisation et de surfaçage sont mises en oeuvre de sorte que :
- le disque, au début de la deuxième vie, a une épaisseur sensiblement égale à 70% de l'épaisseur initiale e, et
- le disque, au début de la quatrième vie, a une épaisseur sensiblement égale à 30% de l'épaisseur initiale e.

De préférence, la première portion complémentaire 12 est alors un autre disque en début de quatrième vie, la troisième portion complémentaire 16 est un autre disque en début de deuxième vie et la deuxième portion complémentaire 14 est un autre disque en début de troisième vie.

Ainsi, il n'est pas nécessaire de produire directement des portions complémentaires aux épaisseurs adaptées. Ces portions complémentaires peuvent en effet être obtenues par surfaçage d'autres disques en fin de première vie, de deuxième vie et de troisième vie.

Bien entendu l'invention n'est pas limitée à la mise en oeuvre décrite et on peut y apporter des variantes sans sortir du cadre de l'invention tel que défini par les revendications.

En particulier, le procédé selon l'invention pourra être mis en oeuvre par l'intermédiaire d'autres types de disques.

Par exemple, bien qu'ici le procédé soit mis en oeuvre sur des disques intermédiaires du type rotor, le procédé pourra tout aussi bien être mis en oeuvre sur des disques intermédiaires de type stator. Par disque intermédiaire, on entend bien sûr un disque de la pile de disques qui n'est pas à l'une des extrémités de la pile de disques.

Selon un mode de mise en oeuvre privilégié, pour un disque stator situé en extrémité de la pile de disques, soit celui sur lequel le poussoir vient s'appuyer soit celui sur lequel une partie du tube de torsion vient reposer, ledit disque d'extrémité sera utilisé au moins au cours d'une première vie avant d'être surfacé pour être utilisé en tant que deuxième portion complémentaire d'un disque intermédiaire rotor ou stator.

De préférence, ledit disque sera utilisé successivement au cours d'une première vie et d'une deuxième vie sans surfaçage et sans être complété. A l'issue de la deuxième vie, on surfacera ledit disque pour l'utiliser en tant que deuxième portion complémentaire d'un disque intermédiaire rotor ou stator.

En variante, ledit disque sera utilisé successivement au cours de plusieurs vies successives sans être utilisé ou complété avant d'être rebuté ou avant d'être surfacé pour être utilisé en tant que deuxième portion complémentaire d'un disque intermédiaire rotor ou stator ou avant d'être surfacé pour être utilisé en tant que portion complémentaire d'un autre disque d'extrémité ayant déjà été utilisé au moins au cours d'une vie.

Le disque pourra être en tout matériau adapté au freinage par exemple en carbone. Le matériau des portions complémentaires sera de préférence dans le même matériau que le disque. De préférence, les disques d'une pile de disques, qu'ils soient rotor ou stator, seront d'un même matériau de sorte que les différentes faces frottantes des disques intermédiaires s'useront de façon sensiblement identique. De préférence, les épaisseurs initiales seront définies en conséquence.

Le procédé est également applicable à des disques de freins de véhicule autre que des freins d'aéronef. Le procédé est également applicable à des disques d'autres freins qu'un frein électromécanique comme par exemple un frein électrique ou encore un frein hydraulique.

## Revendications

1. Procédé d'utilisation et de rénovation d'un disque d'une pile de disques (7, 107, 207, 307) d'un frein de véhicule comportant les étapes d'utiliser le disque lors de plusieurs vies (9) et de compenser une diminution d'épaisseur après chaque vie en assemblant le disque avec une portion complémentaire, selon les dispositions suivantes :
- après une première vie à l'issue de laquelle le disque à une épaisseur comprise entre 60 et 90% d'une épaisseur initiale du disque, surfacer les deux faces du disque et l'assembler d'un côté avec une première portion complémentaire (12) de sorte que l'assemblage ait une épaisseur sensiblement égale à l'épaisseur initiale du disque;
- après une deuxième vie à l'issue de laquelle le disque a une épaisseur supérieure à 50% de l'épaisseur initiale, surfacer le disque à une épaisseur de sensiblement 50% de l'épaisseur initiale et l'assembler avec une deuxième portion complémentaire (14) de sorte que l'assemblage ait une épaisseur sensiblement égale à l'épaisseur initiale du disque;
- après une troisième vie à l'issue de laquelle le disque a une épaisseur comprise entre 40% et 10% de l'épaisseur initiale, surfacer le disque et l'assembler avec une troisième portion complémentaire (16) de sorte que l'assemblage ait une épaisseur sensiblement égale à l'épaisseur initiale du disque;
- après une quatrième vie, rebuter le disque.

2. Procédé selon la revendication 1, dans lequel le disque (9) présente en début de deuxième vie et en début de quatrième vie des épaisseurs qui sont complémentaires.

3. Procédé selon la revendication 2, dans lequel la première portion complémentaire (12) est un autre disque en début de quatrième vie.

4. Procédé selon la revendication 2, dans lequel la troisième portion complémentaire (16) est un autre disque en début de deuxième vie.

5. Procédé selon la revendication 1, dans lequel la deuxième portion complémentaire (14) est un autre disque en début de troisième vie.

6. Procédé selon la revendication 1, dans lequel, à l'issue de la première vie, on surface le disque (9) à une épaisseur de 70% de l'épaisseur initiale et dans lequel, à l'issue de la troisième vie, on surface le disque à une épaisseur de 30% de l'épaisseur initiale.

7. Procédé d'utilisation et de rénovation d'une pile de disques d'un frein de véhicule, la pile de disque comprenant un premier disque d'extrémité contre lequel, en service, un poussoir du frein s'appuie, des disques intermédiaire et un deuxième disque d'extrémité contre lequel, en service, un tube de torsion du frein s'appuie, le procédé comportant l'étape de :
- utiliser et rénover chaque disque intermédiaire selon l'une des revendications précédentes ;
- utiliser le premier disque d'extrémité au moins au cours d'une première vie sans le compléter ou le surfacer, et, à l'issue d'une des vies du premier disque d'extrémité, surfacer le premier disque d'extrémité pour former une deuxième portion complémentaire.

8. Procédé d'utilisation selon la revendication 7, comportant en outre l'étape d'utiliser le deuxième disque d'extrémité au moins au cours d'une première vie sans le compléter ou le surfacer, et, à l'issue d'une des vies du deuxième disque d'extrémité, surfacer le deuxième disque d'extrémité pour former une deuxième portion complémentaire.

## Patentansprüche

1. Verfahren zur Verwendung und Erneuerung einer Scheibe eines Stapels (7, 107, 207, 307) von Scheiben einer Fahrzeugbremse, umfassend die Schritte des Verwendens der Scheibe während mehrerer Lebensdauern (9) und des Ausgleichens einer Verringerung der Stärke nach jeder Lebensdauer, indem die Scheibe mit einem komplementären Abschnitt gemäß den folgenden Bestimmungen zusammengefügt wird:
- nach einer ersten Lebensdauer, an deren Ende die Scheibe eine Stärke zwischen 60 und 90% einer Anfangsstärke der Scheibe hat, Glätten der beiden Seiten der Scheibe und Zusammenfügen derselben auf einer Seite mit einem ersten komplementären Abschnitt (12), so dass die Zusammensetzung eine Stärke hat, die im Wesentlichen gleich der Anfangsstärke der Scheibe ist;
- nach einer zweiten Lebensdauer, an deren Ende die Scheibe eine Stärke von größer 50% der Anfangsstärke hat, Glätten der Scheibe mit einer Stärke von im Wesentlichen 50% der Anfangsstärke und Zusammenfügen derselben mit einem zweiten komplementären Abschnitt (14), so dass die Zusammensetzung eine Stärke hat, die im Wesentlichen gleich der Anfangsstärke der Scheibe ist;
- nach einer dritten Lebensdauer, an deren Ende die Scheibe eine Stärke zwischen 40% und 10% der Anfangsstärke hat, Glätten der Scheibe und Zusammenfügen derselben mit einem dritten komplementären Abschnitt (16), so dass die Zusammensetzung eine Stärke hat, die im Wesentlichen gleich der Anfangsstärke der Scheibe ist;
- nach einer vierten Lebensdauer, Aussortieren der Scheibe.

2. Verfahren nach Anspruch 1, wobei die Scheibe (9) zu Beginn der zweiten Lebensdauer und zu Beginn der vierten Lebensdauer Stärken aufweist, die komplementär sind.

3. Verfahren nach Anspruch 2, wobei der erste komplementäre Abschnitt (12) eine andere Scheibe zu Beginn der vierten Lebensdauer ist.

4. Verfahren nach Anspruch 2, wobei der dritte komplementäre Abschnitt (16) eine andere Scheibe zu Beginn der zweiten Lebensdauer ist.

5. Verfahren nach Anspruch 1, wobei der zweite komplementäre Abschnitt (14) eine andere Scheibe zu Beginn der dritten Lebensdauer ist.

6. Verfahren nach Anspruch 1, wobei man am Ende der ersten Lebensdauer die Scheibe (9) mit einer Stärke von 70% der Anfangsstärke glättet und wobei man am Ende der dritten Lebensdauer die Scheibe mit einer Stärke von 30% der Anfangsstärke glättet.

7. Verfahren zur Verwendung und Erneuerung eines Stapels von Scheiben einer Fahrzeugbremse, wobei der Stapel von Scheiben eine erste Endscheibe umfasst, gegen die sich im Betrieb ein Stößel der Bremse stützt, Zwischenscheiben sowie eine zweite Endscheibe, gegen die sich im Betrieb ein Drehrohr der Bremse stützt, wobei das Verfahren den Schritt umfasst:
- Verwenden und Erneuern jeder Zwischenscheibe nach einem der vorhergehenden Ansprüche;
- Verwenden der ersten Endscheibe zumindest während einer ersten Lebensdauer, ohne sie zu vervollständigen oder sie zu glätten, und am Ende einer der Lebensdauern der ersten Endscheibe, Glätten der ersten Endscheibe, um einen zweiten komplementären Abschnitt zu bilden.

8. Verwendungsverfahren nach Anspruch 7, ferner umfassend den Schritt des Verwendens der zweiten Endscheibe zumindest während einer ersten Lebensdauer, ohne sie zu vervollständigen oder sie zu glätten, und am Ende einer der Lebensdauern der zweiten Endscheibe Glätten der zweiten Endscheibe, um einen zweiten komplementären Abschnitt zu bilden.

## Claims

1. A method of using and renovating a disk from a stack of disks (7, 107, 207, 307) of a vehicle brake, the method comprising the steps of using the disk during a plurality of lives (9) and of compensating a reduction in thickness after each life by assembling the disk with a complementary portion, in compliance with the following arrangements:
• after a first life, at the end of which the disk has a thickness lying in the range 60% to 90% of an initial thickness of the disk, surfacing both faces of the disk and assembling it on one side with a first complementary portion (12) so that the assembly has a thickness substantially equal to the initial thickness of the disk;
• after a second life, at the end of which the disk has a thickness greater than 50% of the initial thickness, surfacing the disk to a thickness substantially equal to 50% of the initial thickness and assembling it with a second complementary portion (14) so that the assembly has a thickness substantially equal to the initial thickness of the disk;
• after a third life, at the end of which the disk has a thickness lying in the range 40% to 10% of the initial thickness, surfacing the disk and assembling it with a third complementary portion (16) so that the assembly has a thickness substantially equal to the initial thickness of the disk; and
• after a fourth life, discarding the disk.

2. A method according to claim 1, wherein the disk (9) presents thicknesses at the beginning of the second life and at the beginning of the fourth life that are complementary.

3. A method according to claim 2, wherein the first complementary portion (12) is another disk at the beginning of its fourth life.

4. A method according to claim 2, wherein the third complementary portion (16) is another disk at the beginning of its second life.

5. A method according to claim 1, wherein the second complementary portion (14) is another disk at the beginning of its third life.

6. A method according to claim 1, wherein, at the end of the first life, the disk (9) is surfaced to a thickness of 70% of the initial thickness, and wherein, at the end of the third life, the disk is surfaced to a thickness of 30% of the initial thickness.

7. A method of using and renovating a stack of disks of a vehicle brake, the stack of disks comprising a first end disk against which a brake pusher bears in operation, intermediate disks, and a second end disk against which a torsion tube of the brake bears in operation, the method comprising the steps of:
• using and renovating each intermediate disk in accordance with any preceding claim; and
• using the first end disk at least during a first life without complementing it or surfacing it, and at the end of one of the lives of the first end disk, surfacing the first end disk in order to form a second complementary portion.

8. A method according to claim 7, further including the step of using the second end disk at least during a first life without complementing it or surfacing it, and at the end of one of the lives of the second end disk, surfacing the second end disk in order to form a second complementary portion.
